# EUROPEAN PATENT SPECIFICATION

(11) **EP 0 408 328 B1**
(45) Date of publication and mention of the grant of the patent: **07.02.1996**
(21) Application number: 90307562.0
(22) Date of filing: 11.07.1990
(51) Int. Cl.: C08J 5/04, C08L 63/00, H04R 7/00

(54) **Ultra-drawn polyethylene fibre reinforced composite material and method of manufacturing same**
Mit ultragestreckter Polyäthylenfaser verstärkte Verbundmaterialien und Verfahren zu deren Herstellung
Matériaux composites renforcés par des fibres de polyéthylène ultra étirées et procédé pour leur préparation

(30) Priority: 13.07.1989 JP 180852/89
(43) Date of publication of application: 16.01.1991
(73) Proprietor: SONY CORPORATION, Tokyo (JP); MITSUI PETROCHEMICAL INDUSTRIES, LTD., Tokyo (JP)
(72) Inventor: Tokura, Kunihiko, Shinagawa-ku, Tokyo (JP); Uryu, Masaru, Shinagawa-ku, Tokyo (JP); Matsuura, Seiji, MITSUI PETROCHEM. IND. LTD., Chiyoda-ku, Tokyo (JP)
(74) Representative: Senior, Alan Murray

(56) References cited:
- US-A- 4 476 285
- DATABASE JAPS, Japanese Patent Office, vol.12 & JP-A-63189098 (SONY CORPORATION) 04-08-1988; abs.date 08-12-1988
- DATABASE WPI, abs.no.80-74373c, Derwent Publications Ltd, London, GB; & JP-A-55115794 (TORAY IND. KK) 27-02-1982
- DATABASE WPIL, abs.no 82-20490e, Derwent Publications Ltd, London, GB; & JP-A-57021427 (TOHO BESLON KK) 04-02-1982

## Description

This invention relates to an ultra-drawn polyethylene fibre reinforced composite material and to a method of making such a material and, more particularly, is concerned with improved adhesion between the ultra-drawn polyethylene fibres and the epoxy resin.

Ultra-drawn fibres in which polyethylene chains are oriented to a higher degree by the ultra-drawing method exhibit superior properties, such as high elasticity, high strength and low specific gravity, and are thought to be among the new industrial materials comparable with carbon or aramid fibres.

A composite material in which the ultra-drawn polyethylene fibres are secured with matrix resin is expected to be used in vessel components, sports goods such as skis or tennis rackets and diaphragms for acoustic loudspeakers.

Polyolefinic polymer materials are generally low in polarity so that they are less liable to be bonded to matrix resins of a higher polarity, such as epoxy resins. The ultra-drawn polyethylene fibres are not exceptions. Hence, attempts have been made to improve the surface of the polyolefinic polymer materials. Known techniques include flaming, UV irradiation, chemical conversion treatment, corona discharge and plasma treatment and these have met with a certain measure of success with some materials. However, so far as ultra-drawn polyethylene fibres are concerned, although adhesion with the matrix resin is slightly improved by plasma treatment, the improvement cannot be said to be adequate, while the characteristics of the produced composite material show no improvement compared with the use of other reinforcement materials.

It is therefore an object of the present invention to provide a composite material showing improved adhesion with matrix resins even when the ultra-drawn polyethylene resins are used as the reinforcement material.

According to the present invention, there is provided an ultra-drawn polyethylene fibre reinforced composite material consisting essentially of ultra-drawn polyethylene fibre and elastomer-modified epoxy resin.

The improved adhesion achieved with the present invention between the ultra-drawn polyethylene fibres and the epoxy resin may be explained as an effect of the epoxy resin being locally decreased in polarity as a result of the elastomer modification and the partial elevation of the affinity with the ultra-drawn polyethylene fibres which are intrinsically low in polarity, and the shape effect.

Within the inside of the ultra-drawn polyethylene fibres, the principal chains of polyethylene are aligned in a bundle along the fibre length, thus accounting for the markedly higher tensile strength and tensile elastic modulus than those of the usual polyethylene fibres. Observation of the ultra-drawn polyethylene fibres under an electron microscope reveals that a large number of micro-pores exist along the length of the fibres, these micro-pores being mainly generated at the time of plasma treatment.

On the other hand, epoxy resin modified by an elastomer undergoes micro phase separation and only the elastomer portions coagulate to form a structural domain which is reduced in polarity as compared with the surrounding epoxy resin portions. It is thought that this structural domain is intruded by capillarity into the micro-pores of the ultra-drawn polyethylene fibres to improve the adhesion.

As will be clear from the above, micro phase separation of the elastomer-modified epoxy resin and the micro-pores on the surface of the ultra-drawn polyethylene fibres contribute to the improved adhesion therebetween in the ultra-drawn polyethylene fibre reinforced composite material according to the present invention. Thus satisfactory adhesion may be achieved without the necessity of performing surface modification by a sizing agent or coupling agent as is effected with the conventional fibre reinforced composite material. Alternatively, these characteristics may be employed to use the elastomer-modified epoxy resin as the sizing agent or to improve the adhesion with other matrix resins.

The ultra-drawn polyethylene fibre reinforced composite material according to the present invention may be used in a wide field of application thanks to its superior strength and anti-cracking properties. Due to elimination of the gap between the fibres and the resin, a marked reduction in distortion may be expected in applying the material to the fabrication of an acoustic diaphragm, for example, for an acoustic loudspeaker.

JP-A-55-115794 discloses fibre-reinforced resins for use in fabricating loud speakers. The resin consists of reinforcing glass fibre, carbon fibre or organic high-elastic resin fibre and a mixture of epoxy resin and ABS resin or butadiène rubber.

The invention will be further described by way of non-limitative example with reference to the accompanying drawing, in which:-

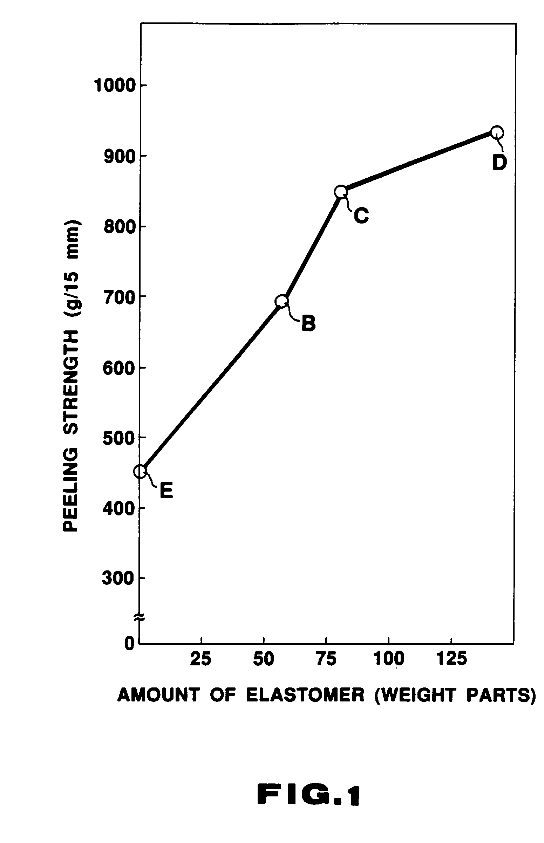

Figure 1 is a characteristic diagram showing the relation between the amount of elastomer (C-1000) employed and the peeling strength with respect to an example of the ultra-drawn polyethylene fibre reinforced composite material.

The present inventors have found through our researches that the adhesion to the ultra-drawn polyethylene fibres may be drastically improved by modifying the epoxy resin as the matrix resin with elastomers to alter their micro-structure.

The elastomer modification may be performed either by incorporating the elastomer into molecular chains of the epoxy resin by a preliminary reaction or by simply blending the epoxy resins and the elastomers and allowing part or all of the elastomer to react during curing. Which of these methods is adopted depends on the processing method for the composite materials and the usage. Above all, with the former methods, the ultra-drawn polyethylene fibre reinforced composite material having a transparent appearance and high hardness may be obtained.

General purpose materials may be used as the epoxy resins without limitation.

As the elastomers, materials such as silicone rubber, butadiene rubber or nitrile butadiene rubber may be used. However, when the elastomer is to be incorporated into molecular chains of the epoxy resin, the elastomer is required to have functional groups capable of reacting with epoxy groups at both terminals of the principal chains. For example, reactive elastomers having functional groups, such as hydroxy groups, carboxyl groups or thiol groups, or structures such as primary, secondary or tertiary amines or acid anhydrides, may be used.

The elastomer is preferably used in an amount of 5 to 50 wt% based on the epoxy resin. Using an amount below the above range, the effect of the elastomer addition is not exhibited, whereas, using an amount above the above range, reduction in the relative proportion of epoxy resin contents with respect to the elastomer may result in the properties of the epoxy resin being degraded.

The elastomer-modified epoxy resin obtained with the present invention may be used alone as matrix resin or blended with other resins so as to prove to be a mixed matrix resin. The elastomer modified epoxy resin may also be used as a sizing agent for the fibre reinforcement material to improve the adhesion with other matrix resins.

The ultra-drawn polyethylene fibres may be subjected to surface treatment well-known per se, such as plasma treatment or corona treatment, for further improving the adhesion.

A preferred embodiment of the present invention will be hereinafter explained on the basis of experimental results.

An epoxy monomer was initially reacted with an elastomer to produce a modified epoxy monomer.

Trifunctional glycidyl amine base epoxy monomer (produced by Sumitomo Kagaku Co Ltd; trade name, ELM-100) was used as the epoxy monomer, whereas a butadiene-acrylonitrile copolymer (produced by Ube Kosan Co Ltd; trade name, Hycar CTBN 1300 x 13) or polybutadiene (produced by the Nippon Soda Co Ltd; trade name, Nisso Polybutadiene C-1000) was used as the elastomer. These epoxy resins and the elastomers have the following structures:

### epoxy monomer (ELM-100)

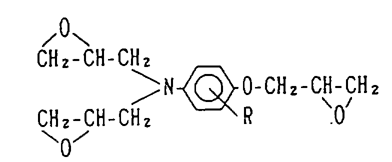

alkyl group epoxy equivalent 105.6 viscosity 11.2 P

### elastomer (CTBN 1300 x 13)

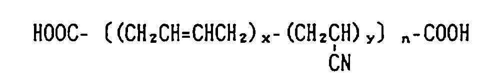

molecular weight 3500

### elastomer (C-1000)

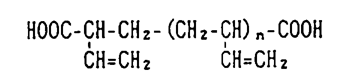

molecular weight 1350

These elastomers were mixed with the epoxy monomers in a ratio shown in the following Table 1, stirred at 110°C and reacted to produce four modified epoxy monomers a to d:

**Table 1**

| (unit: weight parts) | | | |
|---|---|---|---|
| modified epoxy monomers | epoxy monomer ELM-100 | elastomers | |
| | | CTBN 130x13 | C-1000 |
| a | 100 | 65 | - |
| b | 100 | - | 65 |
| c | 100 | - | 77 |
| d | 100 | - | 138 |

The reaction scheme in the case of using the elastomer C-1000 is as follows:

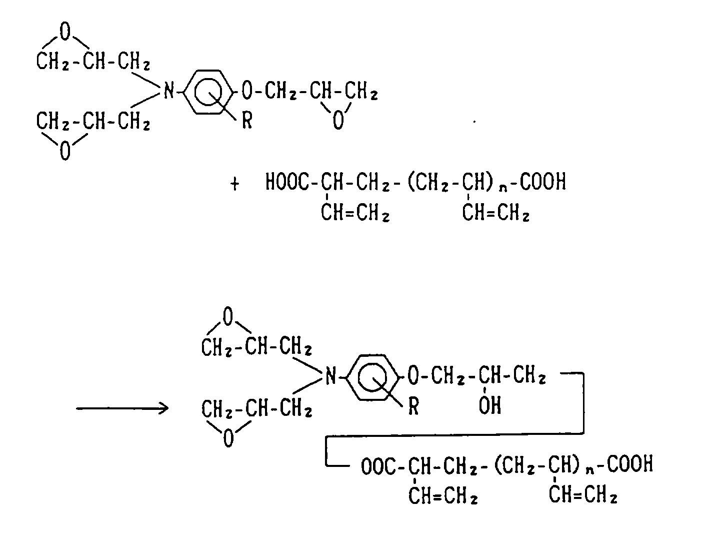

The progress of the reaction was ascertained from the decrease of the concentration of the carboxyl groups in the reaction solution by titration employing a 0.1N-potassium hydroxide-methanol solution and from the shift of the carbonyl absorption band in the IR absorption spectrum. The thus synthesised modified epoxy monomers a to d were all transparent and presented a uniform appearance.

To the above respective modified epoxy monomers were added 4-methylhexahydrophthalic anhydride (prepared by Shin-Nippon-Rika Co Ltd; trade name, MH-700) as a hardener and 2, 4, 6-tris(dimethylaminomethyl) phenol as an accelerator, these being added in the ratios given in the following Table 2 to produce the matrix resins A to D.

By way of comparison, the matrix resin E making use of the epoxy monomer ELM-100 in place of the modified epoxy monomer was also prepared.

**Table 2**

| (unit: weight parts) | | | | |
|---|---|---|---|---|
| matrix resins | modified epoxy monomers (only A to D) | | hardener | accelerator |
| | kind | amount | | |
| A | a | 100 | 51 | 1 |
| B | b | 100 | 81 | 1 |
| C | c | 100 | 72 | 2 |
| D | d | 100 | 49 | 2 |
| E | (ELM-100) | (100) | 160 | 2 |

The above matrix resins A to E were impregnated in a cloth woven from ultra-drawn polyethylene fibres (referred to hereinafter as SDPE cloth) to produce a composite material, which was then subjected to a peeling test to evaluate the adhesion with the ultra-drawn polyethylene fibres and the matrix resins.

The SDPE cloth employed is obtained by using ultra-drawn polyethylene fibres with 1000/deniers/100 filaments, yarn diameter 40 m (Mitsui Petrochemical Industries Ltd; trade name, techmilon) at a density of 17 yarns/25 mm for both the wefts and the warps and is subject in advance to a plasma treatment.

The test pieces for the peeling tests were prepared in the following manner.

A teflon-coated iron plate acting as a press table was heated and a flexible stainless steel mesh (length, 150-mm; width, 15 mm; 100 meshes) which was defatted in advance in methyl ethyl ketone by ultrasonic washing for ten minutes was placed on the table as the carrier. The matrix resin heated to 50°C was coated on the mesh. Two SDPE cloths and the same stainless steel mesh as that mentioned above were placed thereon in this order and the matrix resin was again applied. A spacer 0.75 mm thick was placed around the stack which was sandwiched on both its sides by the same teflon coated iron plate as above. Heating was then applied at 120°C for 20 minutes to harden the matrix resin and to press fit the ultra-drawn polyethylene fibres. This stack was placed for one day in a desiccator and dried so as to be used as test piece.

The peeling strength at the time the test piece is peeled at the boundary between the two cloths was measured. Measurement was made using a peeling strength tester (prepared by the Orientec Co ltd; trade name, Tensilon STM-T-100BP) at a temperature of 20°C and at a crosshead speed of 300 mm/minute.

Figure 1 shows the relationship between the amount of the elastomer (C-1000) employed and the peeling strength. In the drawing, the ordinate shows the peeling strength (g/15 mm) and the abscissa the amount of addition of the elastomer (wt. parts) relative to 100 parts by weight of the epoxy monomer. The symbols annotating the plots stand for the kinds of the matrix resin employed for producing the test pieces. The peeling strength is increased with increase in the amount of addition of the elastomer and was increased at the time of addition of 77 wt parts (matrix resin C) to twice that at the time of non-addition (matrix resin E).

The destroyed surface produced by the peeling test was observed with a scanning electron microscope (manufactured by the Japan Electronics Co Ltd; trade name, JSM-200).

With the use of the matrix resin A modified with the elastomer CTBN 1300 x 13, a micro phase separation occurred in the resin and the elastomer portion was formed into fine spheres. Since part of the fine spheres was also affixed to the surface of the ultra-drawn polyethylene fibres, it may be surmised that these spherical portions invade into the micro-pores of the ultra-drawn polyethylene fibres to improve the adhesion so that only the spherical portions were peeled from the epoxy resin at the time of the peeling test.

When the matrix resins B to D, modified by the elastomer C-1000, are used, white-tinted fine projections were seen to be present, extending in the peeling direction. Although the phase separation is not so sharp as in the case of the above mentioned elastomer CTBN 1300 x 13, it may be surmised that the elastomer portion similarly low in polarity has intruded into the micro-pores of the ultra-drawn polyethylene fibres to raise the adhesion.

Conversely, when the matrix fibres E are used, the ultra-drawn polyethylene fibres and the resin are seen to be peeled sporadically while the cohesion destruction of the resin heaped in recesses at the intersections of the warp and weft yarns of the SDPE cloth was also observed. It may be surmised that, as the peeling test piece is progressively separated, interface peeling occurs first between the fibres and the resin, and the cohesion destruction is then started at the thickened resin portion due to insufficient strength. In short, the cohesion destruction is produced as a result of insufficient adhesion between the fibres and the resin. This can also be substantiated from the fact that no protuberances are present on the destroyed resin surface and only the micro-pores of the fibres have been transferred.

## Claims

1. An ultra-drawn polyethylene fibre reinforced composite material consisting essentially of ultra-drawn polyethylene fibre and elastomer-modified epoxy resin.

2. An ultra-drawn polyethylene fibre reinforced composite material according to claim 1 wherein said elastomer is any one of silicone rubber, butadiene rubber and nitrile butadiene rubber.

3. A method of manufacturing a material according to claim 1 or 2 wherein said elastomer-modified epoxy resin is formed by incorporating the elastomer into molecular chains of the epoxy resin in a preliminary reaction.

4. A method of manufacturing a material according to claim 1 or 2 wherein said elastomer-modified epoxy resin is formed by blending the epoxy resin and the elastomer and allowing a part or all of the elastomer to react during curing.

5. A method according to claim 3 or 4 wherein said elastomer has functional groups capable of reacting with epoxy groups at both terminals of the principal chains.

6. A method of manufacturing a material according to claim 1 or 2 or a method according to any one of claims 3 to 5 wherein said elastomer is used in an amount of 5 to 50 wt% based on the epoxy resin.

7. A method of manufacturing a material according to claim 1 or 2 or a method according to any one of claims 3 to 6 wherein said ultra-drawn polyethylene fibre is subject to surface treatment.

8. An acoustic diaphragm fabricated of a material according to claim 1 or 2 or a material manufactured by the method of any one of claims 3 to 7.

## Patentansprüche

1. Mit ultragestreckter Polyethylenfaser verstärktes Verbundmaterial im wesentlichen bestehend aus ultragestreckter Polyethylenfaser und elastomermodifiziertem Epoxidharz.

2. Mit ultragestreckter Polyethylenfaser verstärktes Verbundmaterila nach Anspruch 1, bei dem das Elastomer eines ist von Silikonkautschuk, Butadienkautschuk und Nitrilbutadienkautschuk.

3. Verfahren zum Herstellen eines Materials nach Anspruch 1 oder 2, bei dem das elastomermodifizierte Epoxidharz durch Einfügen des Elastomeren in Molekularketten des Epoxidharzes in einer Vorreaktion gebildet wird.

4. Verfahren zum Herstellen eines Materials nach Anspruch 1 oder 2, bei dem das elastomermodifizierte Epoxidharz durch Bilden eines Blends des Epoxidharzes und des Elastomeren gebildet wird, wobei ein Teil des Elastomeren oder das gesamt Elastomer während des Aushärtens reagieren kann.

5. Verfahren nach Anspruch 3 oder 4, bei dem das Elastomer funktionelle Guppen besitzt, die mit Epoxidgruppen an beiden Enden der Hauptketten reagieren können.

6. Verfahren zum Herstellen eines Materials nach Anspruch 1 oder 2, oder Verfahren nach einem der Ansprüche 3 bis 5, bei dem das Elastomer in einer Menge von 5 bis 50 Gew.-% auf der Grundlage des Epoxidharzes verwendet wird.

7. Verfahren zum Herstellen eines Materials nach Anspruch 1 oder 2, oder Verfahren nach einem der Ansprüche 3 bis 6, bei dem die ultragestreckte Polyethylenfaser einer Oberflächenbehandlung unterworfen wird.

8. Schalltechnische Membran, hergestellt aus einem Material nach Anspruch 1 oder 2 oder einem Material, das gemäß dem Verfahren nach einem der Ansprüche 3 bis 7 hergestellt ist.

## Revendications

1. Matériau composite renforcé par des fibres de polyéthylène ultra-étirées consistant essentiellement en fibres de polyéthylène ultra-étirées et en une résine époxy modifiée par un élastomère.

2. Matériau composite renforcé par des fibres de polyéthylène ultra-étirées selon la revendication 1, dans lequel ledit élastomère est l'un quelconque parmi le caoutchouc de silicone, le caoutchouc de butadiène et le caoutchouc de nitrile-butadiène.

3. Procédé de fabrication d'un matériau selon la revendication 1 ou 2, dans lequel ladite résine époxy modifiée par un élastomère est formée par incorporation de l'élastomère dans les chaînes moléculaires de la résine époxy dans une réaction préliminaire.

4. Procédé de fabrication d'un matériau selon la revendication 1 ou 2, dans lequel ladite résine époxy modifiée par un élastomère est formée par mélange de la résine époxy et de l'élastomère et par réaction de tout ou partie de l'élastomère pendant le durcissement.

5. Procédé selon la revendication 3 ou 4, dans lequel ledit élastomère a des groupes fonctionnels capables de réagir avec des groupes époxy aux deux extrémités des chaînes principales.

6. Procédé de fabrication d'un matériau selon la revendication 1 ou 2 ou procédé selon l'une quelconque des revendications 3 à 5, dans lequel ledit élastomère est utilisé en une quantité de 5 à 50 % en masse par rapport à la résine époxy.

7. Procédé de fabrication d'un matériau selon la revendication 1 ou 2 ou procédé selon l'une quelconque des revendications 3 à 6, dans lequel lesdites fibres de polyéthylène ultra-étirées sont soumises à un traitement de surface.

8. Diaphragme acoustique fabriqué en un matériau selon la revendication 1 ou 2 ou en un matériau fabriqué par le procédé selon l'une quelconque des revendications 3 à 7.
